# EUROPÄISCHE PATENTSCHRIFT

(11) **EP 0 519 253 B1**
(45) Veröffentlichungstag und Bekanntmachung des Hinweises auf die Patenterteilung: **26.11.1997**
(21) Anmeldenummer: 92109186.4
(22) Anmeldetag: 01.06.1992
(51) Int. Cl.: H04N 1/00, G06F 3/12

(54) **Verfahren zum Realisieren eines Seitendruckers für einen Personalcomputer mittels eines Telefaxgerätes**
Method for realization of a personal computer page printer by means of a facsimile device
Procédé de réalisation d'une imprimante par page pour un ordinateur personnel en utilisant un télécopieur

(30) Priorität: 18.06.1991 DE 4120080
(43) Veröffentlichungstag der Anmeldung: 23.12.1992
(73) Patentinhaber: SIEMENS AKTIENGESELLSCHAFT, 80333 München (DE)
(72) Erfinder: Hirsch, Lucian, Dipl.-Ing., W-8000 München 90 (DE)

(56) Entgegenhaltungen:
- DE-A- 3 431 754
- XEROX DISCLOSURE JOURNAL Bd. 13, Nr. 3, Mai 1988, STAMFORD, CONN US Seiten 157 - 160 ROSS 'SOFTWARE ELECTRONIC SUB-SYSTEM'
- PATENT ABSTRACTS OF JAPAN vol. 13, no. 439 (E-827)24. Dezember 1987
- PATENT ABSTRACTS OF JAPAN vol. 13, no. 043 (P-821)31. Januar 1989

## Beschreibung

Die Erfindung betrifft ein Verfahren zum Realisieren eines Seitendruckers für einen Personalcomputer mittels eines Telefaxgerätes, wobei das Telefaxgerät ein zum Übertragen von Faksimilenachrichten über Teilnehmerleitungen geeignetes Sende-Empfangsgerät ist, wobei die auszudruckenden Daten zunächst in den Datenspeicher des PC eingegeben werden und von dort über eine Centronics-Schnittstelle dem PC-Eingang des Telefaxgerätes zugeleitet werden und wobei die Druckereinheit des Telefaxgerätes ein Thermotransferdruckwerk enthält.

Aufgabe ist es, ein Verfahren für ein Telefaxgerät (Sende-Empfänger) zu finden, damit dessen Druckereinheit als Seitendrucker für unterschiedliche Personalcomputer geeignet ist, wobei eine hohe Druckqualität und Druckgeschwindigkeit gefordert ist.

Dies wird dadurch erreicht, daß in einer Steuereinheit am PC-Eingang des Telefaxgerätes ein erster und ein zweiter Pufferspeicher abwechselnd die von dem PC gelieferten Daten aufnehmen und an einen Seitenspeicher der Druckereinheit weitergeben, daß dieser Vorgang nur dann eingeleitet wird, wenn ein Einschaltimpuls vom PC dem Telefaxgerät in dessen Ruhezustand zugeleitet wird, daß weiterhin in einem Register der Druckereinheit zwecks Anpassung an unterschiedliche PC-Anwendungen unterschiedliche Standard-Emulationen abgespeichert und aktivierbar sind und daß weiterhin dem am Telefaxgerät vorgesehenen Display und den für den Telefaxbetrieb vorgesehenen Tasten im Druckbetrieb andere Funktionen zugeordnet sind.

Hieraus ergibt sich der Vorteil, daß die Druckereinheit des Telefaxgerätes neben ihrer üblichen Verwendung als Faksimile-Empfangsteil als Drucker für unterschiedliche Standardausführungen von Personalcomputern verwendet werden kann, wobei den Bedienungselementen des Telefaxgerätes je nach Betriebsart unterschiedliche Funktionen zugeordnet werden, was eine wirtschaftliche Ausführung begünstigt.

Eine besondere Weiterbildung des erfindungsgemäßen Verfahrens besteht darin, daß die einzelnen Zeichen des Datenflusses aus dem PC auch als Hexadezimalwerte geliefert werden können, daß diese Zeichen in einem Register der Druckereinheit entsprechend den Hexadezimalwerten in ihrer binären Form abgespeichert sind und so durch die Druckereinheit des Telefaxgerätes aufgezeichnet werden.
Mit der Druckereinheit des Telefaxgerätes wird eine den üblichen guten Druckern vergleichbare Druckqualität erreicht.

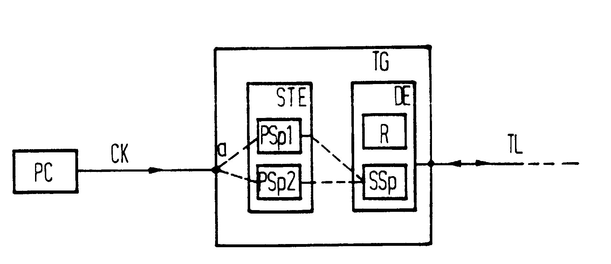

Das erfindungsgemäße Verfahren wird anhand einer Figur näher erläutert.
Die Figur zeigt im einzelnen einen Personalcomputer PC, eine Centronics-Schnittstelle (Kabel) CK, ein Telefaxgerät TG mit einer Steuereinheit STE und einer Druckereinheit DE und eine Teilnehmerleitung TL. Die Steuereinheit STE enthält noch zwei Pufferspeicher PSpl und PSp2 und die Druckereinheit DE enthält noch einen Seitenspeicher SSp und ein Register R.

Mit dem Telefaxgerät TG kann über die Teilnehmerleitung TL ein normaler Faksimilebetrieb abgewickelt werden, indem ein Scanner eine vorliegende Information abtastet und ein Sendeteil diese Information aussendet oder es kann eine eingehende Information durch die Druckereinheit DE in Pixelform aufgezeichnet werden. Die am Telefaxgerät vorhandenen Tasten dienen dabei beispielsweise zum Starten einer Sendung, zum Unterbrechen einer Sendung, zur Adresseneingabe usw. und ein vorhandenes Display gibt ein entsprechendes Menue für den Faksimilebetrieb an.

Wenn sich das Telefaxgerät im Ruhezustand befindet, kann es über eine sog. Centronics-Schnittstelle (Standard parallele PC-Schnittstelle) CK von einem Personalcomputer PC angesteuert werden. Diese Ansteuerung kann aus einem speziellen Impuls bestehen, sie kann aber auch einfach im ersten Zeichen eines vom PC ausgehenden Datenflusses bestehen. Das Telefaxgerät TG geht dann in einen reinen Druckermodus über. Im Display wird jetzt ein Druckermenue aufgezeigt und die einzelnen Tasten des Bedienungsfeldes am Telefaxgerät TG übernehmen jetzt für den Druckerbetrieb notwendige Funktionen.

Für den Druckerbetrieb ist im Telefaxgerät TG zusätzlich eine Steuereinheit STE vorgesehen. Diese Steuereinheit STE erkennt zunächst den Wunsch auf Umschalten in den Druckerbetrieb und bewirkt die Umschaltung der Display- und Tastenfunktionen. Außerdem bewirkt sie die temporäre Sperrung des Telefaxgerätes für den normalen Faksimilebetrieb. Die Steuereinheit leitet die vom PC eingehenden Informationen an einen Seitenspeicher SSp der Druckereinheit DE weiter. Dazu sind ihr zwei Pufferspeicher PSp1 und PSp2 von je ca. 16 KByte zugeordnet. Diese Speicher werden abwechselnd während der Datenübertragung vom PC zum Telefaxgerät an den PC-Eingang a angeschaltet und nach vollgespeichertem Zustand abwechselnd in den größeren Seitenspeicher SSp der Druckereinheit DE eingelesen. Dieser Seitenspeicher SSp kann eine vollständige Informationsseite speichern. Das Zwischenspeichern in die Pufferspeicher dient dazu, daß am Ausgang der Pufferspeicher die Daten der Information -falls notwendig- in eine für den Seitenspeicher SSp passende Form gebracht werden können.

Ist der Seitenspeicher gefüllt, dann erfolgt automatisch der Ausdruck der ganzen Seite. Diese im Seitenspeicher befindliche Information kann beliebig oft als Kopie erneut ausgedruckt werden. Das Ausdrucken einer unvollständigen Seite kann auch dadurch aktiviert werden, daß vom PC aus ein entsprechendes Zeichen ("Seitenende") ausgesendet wird oder indem eine entsprechende Taste im Bedienungsfeld des Telefaxgerätes gedrückt wird. Die Druckstärke kann ebenfalls durch Betätigen einer entsprechenden Taste verändert werden.

Soll der Druckvorgang unterbrochen werden, -z.B. wegen Papiermangel- dann wird durch Betätigen einer Taste der Ausdruck unterbrochen, der Datenfluß abgestellt und der PC in Wartestellung gebracht. Nach erneutem Betätigen der Taste wird die Informationsdurchgabe und der Druckvorgang fortgesetzt. Durch eine Stop-Taste kann der gesamte Druckbetrieb abgeschaltet und das Telefaxgerät für Faksimilebetrieb sofort bereitgestellt werden. Der Druckereinheit DE ist ein Register R zugeordnet, aus dem die Steuerprogramme entnommen werden können, um eine Emulation der Druckereinheit DE zu ermöglichen, d.h. um dem eigentlichen Drucker je nach Bedarf die Möglichkeit zu geben, die Eigenschaften verschiedener Druckertypen bezüglich Text und Grafikcharakteristiken nachzuvollziehen. Die einzelnen Emulationen sind einstellbar.

## Patentansprüche

1. Verfahren zum Realisieren eines Seitendruckers für einen Personalcomputer (PC) mittels eines Telefaxgerätes, wobei das Telefaxgerät ein zum Übertragen von Faksimilenachrichten über Teilnehmerleitungen geeignetes Sende-Empfangsgerät ist, wobei die auszudruckenden Daten zunächst in den Datenspeicher des Personalcomputers eingegeben werden und von dort über eine Centronics-Schnittstelle dem Personalcomputer-Eingang des Telefaxgerätes zugeleitet werden,
**dadurch gekennzeichnet,** daß die Druckereinheit des Telefaxgerätes ein Thermotransferdruckwerk enthält, daß in einer Steuereinheit (STE) am Personalcomputer-Eingang (a) des Telefaxgerätes (TG) ein erster (PSp1) und einer zweiter (PSp2) Pufferspeicher abwechselnd die von dem Personalcomputer (PC) gelieferten Daten aufnehmen und an den Seitenspeicher (SSp) der Druckereinheit (DE) weitergeben, daß dieser Vorgang nur dann eingeleitet wird, wenn ein Einschaltimpuls vom Personalcomputer (PC) dem Telefaxgerät (TG) in dessen Ruhezustand zugeleitet wird, daß weiterhin in einem Register (R) der Druckereinheit (DE) zwecks Anpassung an unterschiedliche Personalcomputer-Anwendungen unterschiedliche Standard-Emulationen abgespeichert und aktivierbar sind und daß weiterhin dem am Telefaxgerät (TG) vorgesehenen Display und den für den Telefaxbetrieb vorgesehenen Tasten im Druckbetrieb andere Funktionen zugeordnet sind.

2. Verfahren nach Patentanspruch 1, **dadurch gekennzeichnet,** daß die einzelnen Zeichen des Datenflusses aus dem Personalcomputer (PC) auch als Hexadezimalwerte geliefert werden können, daß diese Zeichen in einem Register (R) der Druckereinheit (DR) entsprechend den Hexadezimalwerten in ihrer binären Form abgespeichert sind und so durch die Druckereinheit (DE) des Telefaxgerätes aufgezeichnet werden.

3. Verfahren nach Patentanspruch 1, **dadurch gekennzeichnet**, daß die gerade im Seitenspeicher (SSp) befindliche Informationsseite beliebig oft nach Betätigen einer hierfür vorgesehenen Taste als Kopie ausgedruckt werden kann.

4. Verfahren nach Patentanspruch 1, **dadurch gekennzeichnet,** daß unterschiedliche Zeiten wahlweise eingestellt werden können, nach denen das Telefaxgerät (TG) beim Ausbleiben von Daten aus dem PC (PC) in Ruhestellung geht.

5. Verfahren nach Patentanspruch 4, **dadurch gekennzeichnet**, daß diese Zeiten beim Kopienherstellen erst nach Erstellung der letzten Kopie beginnen.

6. Verfahren nach Patentanspruch 1, **dadurch gekennzeichnet,** daß die in den Pufferspeichern (PSp1, PSp2) abgespeicherten Daten in für den Seitenspeicher (SSp) verarbeitbarer Form an diesen weitergegeben werden.

## Claims

1. Method for realizing a page printer for a personal computer (PC) by means of a facsimile device, the facsimile device being a transceiver which is suitable for transmitting facsimile messages over subscriber lines, the data to be printed out being initially input into the computer memory of the personal computer and being fed from there to the input of the facsimile device via a Centronics interface, characterized in that the printer unit of the facsimile device contains a thermal transfer printing unit, in that, in a control unit (STE) at the personal computer input (a) of the facsimile device (TG), a first (PSpl) and a second (PSp2) buffer memory alternately receive the data supplied by the personal computer (PC) and pass it on to the page memory (SSp) of the printer unit (DE), in that this procedure is initiated only if a switch-on pulse from the personal computer (PC) is fed to the facsimile device (TG) in the stand-by state of said facsimile device (TG), in that, furthermore, different standard emulations are stored in a register (R) of the printer unit (DE) for the purpose of adaptation to different personal computer applications, and can be activated, and in that, furthermore, in printing mode other functions can be assigned to the display provided at the facsimile device (TG) and to the keys provided for the telefax mode.

2. Method according to Patent Claim 1, characterized in that the individual characters of the data flow from the personal computer (PC) can also be supplied as hexadecimal values, in that these characters are stored in their binary form in a register (R) of the printer unit (DR) in accordance with the hexadecimal values and are recorded by the printer unit (DE) of the facsimile device in this form.

3. Method according to Patent Claim 1, characterized in that the information page which is currently located in the page memory (SSp) can be printed out, as a copy, as many times as desired after a key provided for this has been activated.

4. Method according to Patent Claim 1, characterized in that different times after which the facsimile device (TG) goes into the stand-by setting when no data is received from the PC (PC) may optionally be set

5. Method according to Patent Claim 4, characterized in that, when copies are being made, these times do not start until after the last copy has been made.

6. Method according to Patent Claim 1, characterized in that the data stored in the buffers (PSpl, PSp2) is passed on to the page memory (SSp) in a form which can be processed by the latter.

## Revendications

1. Procédé pour réaliser une imprimante de pages pour un ordinateur personnel (PC) au moyen d'un télécopieur, le télécopieur étant un appareil d'émission-réception approprié à la transmission d'informations de télécopies par l'intermédiaire de lignes d'abonné, dans lequel on introduit d'abord les données à imprimer dans la mémoire de données de l'ordinateur personnel et on les achemine de là par l'intermédiaire d'une interface Centronics à l'entrée d'ordinateur personnel du télécopieur,
caractérisé en ce que
l'unité d'impression du télécopieur comprend un organe d'impression par transfert de chaleur,
une première (Psp1) et une deuxième (PSp2) mémoires tampon reçoivent en alternance, dans une unité (STE) de commande a l'entrée (a) du télécopieur (TG) les données fournies par l'ordinateur personnel (PC) et les retransmettent à la mémoire (SSp) de pages de l'unité (DE) d'impression, on ne déclenche cette opération que lorsqu'une impulsion de branchement est envoyée par l'ordinateur personnel (PC) au télécopieur (TG) dans son état de repos, différentes émulations normalisées sont mémorisées et peuvent être activées en outre dans un registre (R) de l'unité (DE) d'impression en vue de l'adaptation à des utilisations différentes et d'autres fonctions sont associées en fonctionnement en imprimante à l'écran prévu sur le télécopieur (TG) et aux touches prévues pour le fonctionnement en télécopieur.

2. Procédé suivant la revendication 1, caractérisé en ce que les divers caractères du flux de données provenant de l'ordinateur personnel (PC) peuvent également être fournis sous forme de valeurs hexadécimales, que ces caractères sont mémorisés dans un registre (R) de l'unité (DR) d'impression en fonction des valeurs hexadécimales dans leur forme binaire et sont enregistrés par l'unité (DE) d'impression du télécopieur.

3. Procédé suivant la revendication 1, caractérisé en ce que la page d'informations se trouvant justement dans la mémoire (SSp) de pages peut être imprimée aussi souvent qu'on le souhaite en tant que copie après l'actionnement d'une touche prévue à cet effet.

4. Procédé suivant la revendication 1, caractérisé en ce que l'on peut régler au choix différents temps, après lesquels le télécopieur (TG) passe en position de repos en cas d'absence de données provenant du PC (PC).

5. Procédé suivant la revendication 4, caractérisé en ce que ces temps ne commencent lors de l'établissement de copies qu'après la production de la dernière copie.

6. Procédé suivant la revendication 1, caractérisé en ce que les données mémorisées dans les mémoires tampon (Psp1, PSp2) sont retransmises sous une forme pouvant être traitée pour la mémoire (SSp) de page à celle-ci.
